# EUROPEAN PATENT SPECIFICATION

(11) **EP 0 666 606 B1**
(45) Date of publication and mention of the grant of the patent: **16.09.1998**
(21) Application number: 95106028.4
(22) Date of filing: 09.06.1993
(51) Int. Cl.: H01M 4/38, H01M 10/28, H01M 10/34

(54) **Hydrogen-occlusion alloy for electrode of a sealed battery**
Wasserstoffeinlagerungslegierung für Elektrode von verschlossener Batterie
Alliage à occlusion d'hydrogène pour électrode de batterie étanche

(30) Priority: 09.06.1992 JP 174814/92
(43) Date of publication of application: 09.08.1995
(62) Divisional of application: 93109303.3
(73) Proprietor: FURUKAWA DENCHI KABUSHIKI KAISHA, Yokohama-shi, Kanagawa-ken (JP)
(72) Inventor: Furukawa, Jun, c/o Iwakijigyosho, Furukawa, Iwaki-shi, Fukushima-ken (JP)
(74) Representative: Schmidt-Evers, Jürgen, Dipl.-Ing.

(56) References cited:
- EP-A- 0 251 385

## Description

This invention relates to a hydrogen-occlusion alloy for an electrode of a sealed type storage battery.

There has been proposed heretofore a sealed type alkaline storage battery in which the negative electrode is a hydrogen-occlusion electrode made of a hydrogen-occlusion alloy capable of occluding and releasing hydrogen reversibly, the battery element is constructed of an assembly of said negative electrode and a positive electrode made of nickel oxide or the like stacked one upon the other in a laminate fashion with a separator interposed therebetween, said battery element is put into a container, a specified amount of an alkaline electrolyte is poured thereinto and finally a cover is attached to the container to hermetically seal it. Since this type of the sealed storage battery is pollution-free and has a high energy density, it has recently attracted much attention as one of the hopeful that could replace conventional nickel-cadmium storage batteries, and thus led to various R & D activities related thereto that are currently under way.

As for a hydrogen-occlusion electrode in particular, it is very advantageous in that, while permitting construction of a storage battery in the same fashion as when a cadmium electrode is used, it can provide a greater energy density of actually usable discharge capacity. Therefore, there have been developed heretofore as a hydrogen-occlusion alloy which constitutes the main component of a hydrogen-occlusion electrode various kinds of alloys having various compositions such as LaNi_{4.5}Al_{0.5}, LaNi_{4.0}Co_{0.5}Al_{0.5}, or the like.

However, in a conventional method of manufacturing a sealed type storage battery using a hydrogen-occlusion electrode, it has been observed that, in a manufacturing process thereof wherein the electrolyte is poured in and the charging is carried out, a metal content contained in the hydrogen-occlusion electrode becomes eluted in the electrolyte especially in the case of the hydrogen-occlusion electrode made of a hydrogen-occlusion alloy containing Co as an additional metal element. This results in a change in the specified composition of the alloy and further causes an oxide of the additional metal to form a film on the surface of the alloy. As a result, the internal pressure of battery rises so greatly that the safety valve of the battery is actuated to let out the excess pressure of the gas, whereupon the electrolyte runs away partially with the gas to result in loss of the electrolyte and in a shorter life of the battery, while additionally making it difficult to charge the battery uniformly because the initial charge is applied alike even though the electrode thereof is not uniformly impregnated with the electrolyte. Adversely affected as noted above, the storage battery manufactured through a conventional manufacturing process is subject to such disadvantages as a comparatively smaller capacity, a shorter cycle life, a greater capacity loss under a high- or low-temperature condition, and a higher internal pressure of battery at the time of an overcharge operation.

EP-A-0 251 385 relates to an electrochemical cell having a negative electrode of a stable hydride-forming material, in which a high power density at a low temperature is obtained by adding from 5 to 45% by weight of LaNi₅ or a comparable high-capacity material having a higher plateau pressure than that of the stable hydride-forming material.

The present invention provides a hydrogen-occlusion alloy for an electrode of a sealed type storage battery specially designed to eliminate the above-noted problems involving said storage battery manufactured through a conventional method.

The working mechanism of the present invention is yet to be clarified, but it may very well be that, with the initial charge commenced within 14 hours after the storage battery was filled up with an alkaline electrolyte, elution into the electrolyte of a metal content such as Co contained in the hydrogen-occlusion alloy of which the negative electrode of the battery is made is effectively checked or prevented while a metal oxide thereof may be prevented from forming a film on the surface of the alloy, thus making it possible to maintain a high surface activity of the alloy and speedily reduce oxygen generated from the positive electrode so as to prevent the internal pressure of battery from rising.

In this instance, it is preferable to keep the internal pressure of the battery at a level not exceeding 19.6 bar (20 Kgf/cm²) in view of the actuation pressure involving the safety valve provided in the battery. The maximum allowable standing time up to the start of the initial charge from the time when the battery was filled up with the electrolyte is 14 hours if the internal pressure of battery is to be kept within the above-prescribed level. Preferably, it should be 10 hours or less after filling up of a battery with an alkaline electrolyte. It is even more preferable to start the initial charge within 5 hours of the standing time, in which case the internal pressure of battery can be kept to half the prescribed level or even lower. The initial charge is discontinued for at least one hour when the battery has become charged for 5 % or more but less than 100 % of its rated capacity, so that permeation and diffusion into the electrode of the electrolyte may be achieved sufficiently during this break period of the initial charge while enabling the internal pressure of battery to be kept at 19.6 bar (20 Kgf/cm²) or lower even at the time of overcharging. Preferably, the break or discontinuance time may be 5 hours or more and, more preferably, 20 hours or more so that the internal pressure of battery may be lowered even further. It is further more desirable to discontinue the initial charge when the battery has become charged for 20 % of its rated capacity, in that such measure reduces the internal pressure to the lowest level.

In an embodiment of the present invention a hydrogen-occlusion alloy having the below-described composition is used to make the hydrogen-occlusion electrode of the battery. More specifically, said hydrogen-occlusion alloy is characterized in that the composition thereof is expressed by a general formula of SLmNiₐCo_{b}Al_{c}M_{d}, wherein SLm represents a mixture of La, Nd and at least one of the other rare earth elements, M represents at least one element selected from Si and Ge, said SLm comprising La for 70 wt.% or more and Nd for 20 wt.% or less and the other requirements include 3.0 ≦ a ≦ 3.8, 0.6 ≦ b < 1.4, 0.3 ≦ c ≦ 0.7 and the range of d being 0.01 ≦ d ≦ 0.05 when M is Si and 0.01 ≦ d ≦ 0.3 when M is Ge.

When the La content in SLm is 70 wt.% or more and the Nd content is 20 wt.% or less, an electrochemically occluded amount of hydrogen in said electrode at the battery temperature of 60°C is maintained at a desirable level of 200 mA/h or higher, the battery life in terms of charge-discharge cycles is desirable 500 cycles or more, and there can be secured a 60 % or higher capacity retention rate in a rapid-discharge operation at low temperatures. Further, it has been revealed that the Ni and Co contents have something to do with the capacity retention rate of the battery in a rapid-discharge operation at low temperatures, the internal pressure of battery at the time of overcharging, and the battery life in terms of charge-discharge cycles; with the Ni content kept in the range of 3.0 ≦ a ≦ 3.8 and the Co content in the range of 0.6 ≦ b < 1.4, there can be obtained a 60 % or higher capacity retention rate in the discharge operation at 0°C and the internal pressure of battery can be kept at 19.6 bar (20 Kgf/cm²) or lower while assuring the battery life of 500 cycles or more.

The Al content also has something to do with the capacity retention rate in the rapid discharge and with the battery life in terms of charge-discharge cycles; with the Al content kept in the range of 0.3 ≦ c ≦ 0.7, there are obtained the battery life of 500 cycles or more and the capacity retention rate of 60 % or higher.

M which can be either Si or Ge also has something to do with the rapid-discharge capacity retention at a room or higher temperature and further with the battery life in terms of charge-discharge cycles and the internal pressure of battery. With the Si content kept in the range of 0.01 ≦ d ≦ 0.05 or the Ge content in the range of 0.01 ≦ d ≦ 0.3, there is maintained a 90 % or higher capacity retention rate in a high-temperature rapid discharge operation while there can be secured the battery life of 500 cycles or more in terms of normal or room-temperature charge-discharge cycles, and at the same time the internal pressure of battery can be kept at or below 19.6 bar (20 Kgf/cm²).

The atomic compounding ratio based on SLm in which the sum total of Ni, Co, Al and M, that is, a + b + c + d, is expressed as a ratio per atom gram of SLm also has something to do with the internal pressure of battery during an overcharge operation and with the battery life of charge-discharge cycles. With the SLm-based ratio kept in the range of 4.5 ≦ a+b+c+d ≦ 5.1, the internal pressure of battery can be held down at 19.6 bar (20 Kgf/cm²) or lower and the battery life of 500 cycles or more obtained.

In the following, embodiments of a method of manufacturing a sealed type storage battery equipped with a hydrogen-occlusion electrode and a hydrogen-occlusion alloy for the hydrogen-occlusion electrode thereof according to the present invention will be described in more detail through preferred specific embodiment examples thereof.

Using a hydrogen-occlusion alloy containing at least Co as one of its contents, a hydrogen-occlusion electrode is manufactured therefrom by means of an ordinary known method. This electrode is used as a negative electrode and, together with a positive electrode manufactured also according to a known method, it is stacked in a laminate fashion with a separator interposed therebetween to make up a storage battery element. This battery element may be rolled up or not rolled up for insertion into a battery container as occasion demands. After it is inserted into the battery container, an alkaline electrolyte is poured into the container and a cover is then securely attached thereto to hermetically seal the container, thus making it a so-called sealed type alkaline storage battery. When subjected to the charging process it becomes a sealed type alkaline storage battery. The effects brought about through the respective charging conditions applied in the manufacturing method according to the prersent invention are as described in the foregoing. Here, the "standing time" preceding the start of the initial charge following the electrolyte fill-up may be taken, so to speak, as a "waiting time" during which the battery now filled up with the electrolyte is kept standing by for the start of the initial charge. When to discontinue the initial charge is, in short, any point of time while the battery has not become charged for 100 % of its rated capacity as yet during said charge. In case of the storage battery giving a battery voltage of 0 to - 0.4 V when filled up with the electrolyte, for example, the initial charge may be discontinued when the battery has become charged to show 0.2 V per cell or higher, preferably 1.2 V.

In the above-described method of manufacturing a sealed type storage battery, it is preferable to select for use a hydrogen-occlusion alloy meeting the requirements defined in the claim.

SLm constituting the main component of the hydrogen-occlusion alloy may be misch metal (Mm) publicly known heretofore or it can be of such composition that a misch metal (Mm) used as the main component is combined with three or more kinds of rare earth elements whose compounding ratio may be determined as appropriate, preferably one consisting primarily of a low-grade misch metal containing a lesser amount of La, which may be adjusted as desired by adding La properly. In either case SLm prepared as above costs much less as compared with the case where La alone is used.

In the following, the present invention is described by means of more specific examples of embodiments.

### Example 1:

SLm, for which was used a commercially available Mm or misch metal (comprising La for 85 wt.&, Ce for 2 wt.%, Nd for 9 wt.% and other rare earth elements for 4 wt.%), Ni, Co, Al and Si were weighed respectively and mixed together for obtaining a compounding ratio of SLm Ni_{3.63}Co_{0.85}Al_{0.50}Si_{0.02}, heated and melted in a high-frequency melting furnace to produce an alloy. An annealing treatment lasting for 10 hours at the temperature of 1000°C was then applied to the alloy. Next, this alloy was mechanically pulverized into a fine powder of 0.104 mm (150 mesh) or less to obtain a fine powder of the hydrogen-occlusion alloy. Added to and mixed with this hydrogen-occlusion alloy powder were powdered nickelcarbonyl (INCO #210) accounting for 15 wt.% and serving as an electroconductive agent and powdered polyvinyliden fluoride accounting for 3 wt.% and serving as a bonding agent. After adding thereto a 1%-concentration aqueous solution of carboxymethyl cellulose, the mixture was kneaded to form a slurry-like material. This slurry-like material was applied to a porous substrate or base plate and dried up. The pasted substrate was then roll-pressed to a predetermined thickness and baked at the temperature of 200°C in a nitrogen atmosphere for 30 minutes to get the bonding agent melted and bonded, thereby producing a hydrogen-occlusion electrode. This hydrogen-occlusion electrode used as the negative electrode and a paste type nickel oxide electrode as the positive were stacked in a laminate fashion with a nylon separator interposed therebetween and rolled up together to make up a storage battery element. This battery element was put into a battery container, an alkaline electrolyte solution so prepared as to comprise mainly potassium hydroxide and additionally a small amount each of sodium hydroxide and lithium hydroxide and have the specific gravity of 1.30 g/cm³ (at 20°C) was poured into the container, and a cover was attached thereto by means of an ordinary known process to seal it hermetically. In this manner, a number of cylindrical sealed type AA-Size 1000mAh storage batteries were manufactured. The paste type nickel oxide positive electrode used in this example was a known type one produced by applying to a foam nickel substrate a paste comprising a nickel hydroxide powder, a nickel carbonyl powder (INCO #255) and a cobalt powder , and drying the pasted substrate and thereafter pressing the same. All of the storage batteries manufactured as above were each equipped with an internal pressure-measuring sensor device to measure the internal pressure of the battery.

Next, using these batteries, investigations were conducted in the below-described manner to find out: a) how much the internal pressure of battery at the time of overcharge would be influenced by the standing time taken up to the start of the initial charge from the time of electrolyte fill-up; b) how much the internal pressure of battery at the time of overcharge would be influenced by the discontinuance or break time given during the initial charge; and c) how much the internal pressure of battery would be influenced by the charged ampere - hour up to the time of the charge break.

With respect to a) above, there were first prepared a plurality of the storage batteries, each given a different length of the standing time counted as from the electrolyte fill-up to the start of the initial charge, namely, one of 2, 5, 10, 14, 20 und 28 hours.

Next, the initial charge with 0.2 C current (200 mA) was applied to each of them at 25°C until a charged electrical quantity (i.e., a charged ampere-hour) amounted to 20 % (200 mAh) of the rated capacity of the battery, whereupon the initial charge was discontinued for the time being. After 10 hours of the charge break, the initial charge was resumed and continued until total charged electrical quantity amounted to 150% (1500 mAh) of the rated capacity of the battery, thus completing the charge (the final voltage, 1.45 V). After kept standing for one hour, the battery was discharged with 0.2 C (200 mA) current at 25°C until the battery voltage came to 1.0 V. Next, the battery was charged with 0.2 C current for 150 % of its rated capacity and thereafter discharged with the same current to the battery voltage of 1.0V. For the purpose of activation, the battery was kept standing at 40°C for 24 hours thereafter and then a capacity confirmation test was conducted wherein the battery was charged again with 0.2 C current for 150 % of the rated capacity and discharged with the same current to the battery voltage of 1.0 V to confirm that all the batteries satisfied the rated capacity. Next, with these batteries charged completely as above, the internal pressure (bar (Kgf/cm²)) during an overcharge operation at 20°C was measured. After kept standing in a constant temperature water bath for 24 hours, each battery was charged with 1 C (1000 mAh) current for 450% (4500 mAh) of the rated capacity, and the internal pressure of each battery with 450% of charged ampere - hour was measured.

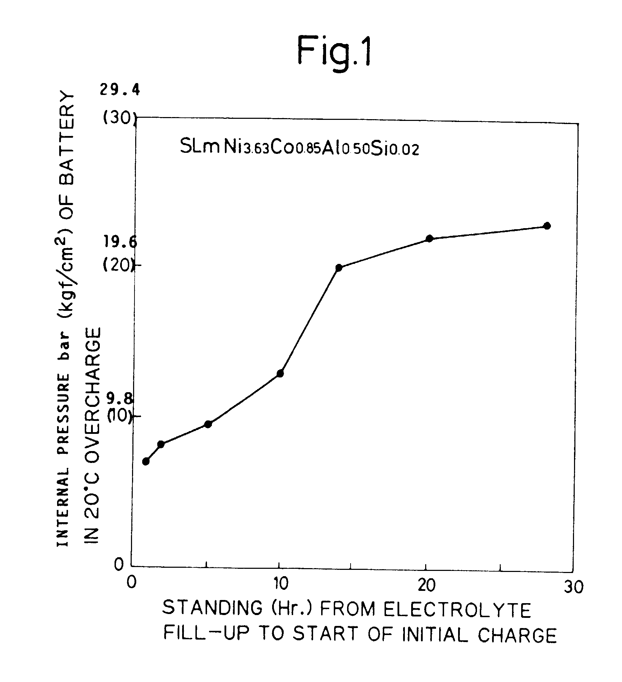

The summarized results thereof are as shown in Figure 1.

As clearly seen from Fig. 1, it has been shown that, with the standing time of 14 hours or less up to the start of the initial charge counted as from the electrolyte fill-up, the internal pressure of battery during an overcharge operation at 20°C can be held down to 19.6 bar (20 Kgf/cm²) or lower and it can be further lowered to approximately 9.8 bar (10 Kgf/cm²), which is a more preferable result, when the initial charge is started within 10 hours or even 5 hours after the electrolyte fill-up.

Next, with respect to b) and c) above, there were prepared a plurality of the batteries all of which were given the same or constant standing time of 5 hours up to the start of the initial charge from the electrolyte fill-up. The initial charge being applied to them was discontinued respectively when the charged electric quantity amounted to 50 % of the rated capacity for some of them, 20 % for some others, 50 % for the third group and 100 % for the fourth.

The initial charge break time was varied among the batteries of each group, namely, 5, 10, 15, 20 and 25 hours. With expiration of the foregoing varied charge break times as mentioned above, the initial charge was resumed for each battery and completed when the charged electrical quantity amounted to 150 % (1500 mAh). For comparison, there were manufactured a plurality of storage batteries which were charged with a usual initial charge that went on without a break.

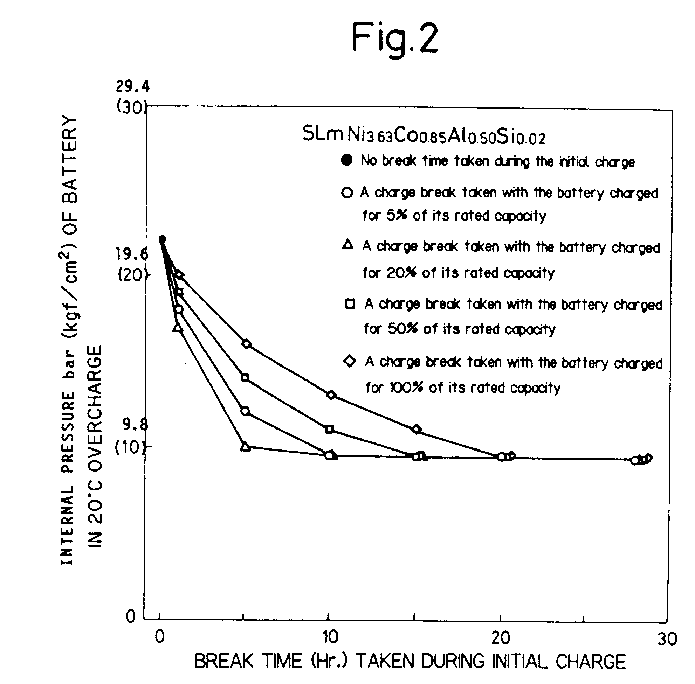

Using these batteries, the internal pressure of each battery during an overcharge operation at 20°C was measured in the same manner as described in the foregoing. The summarized results thereof are as shown in Fig. 2.

As is clear from Fig. 2, it has been shown that, in case of the initial charge break given when the battery has become charged for 5 % or more but less than 100 % of the rated capacity and lasting for at least one hour or more, it is possible to hold down to 19.6 bar (20 Kgf/cm²) or lower the internal pressure of battery in the overcharge at 20°C.

It has further been learned from the above case that the internal pressure of battery is the lowest with the initial charge break given when the battery has become charged for 20 % of the rated capacity, indicating said practice is optimum, and that the charge break time lasting for 5 hours or more is indicated as more desirable and, especially with the break time of 20 hours, the internal pressure can be held down to a very low level of 9.8 bar (10 Kgf/cm²) at any stage of such incompletely charged conditions that the charged electric quantity is in the range from 5 % or more of the rated capacity of the battery to less than 100 % thereof.

### Example 2:

Using a commercially available Mm as its main component material, several kinds of SLm additionally containing such rare earth elements as La, Nd, Ce and Pr arranged for different compounding ratios as shown in Table 1 below were prepared, from which several kinds of hydrogen-occlusion alloys described hereinafter were manufactured respectively.

| KIND OF SLm No. | 1 | 2 | 3 | 4 | 5 | 6 | 7 | 8 | 9 | 10 |
|---|---|---|---|---|---|---|---|---|---|---|
| | | | | | | | | | | |
| EACH La | 25 | 45 | 70 | 75 | *75 | 85 | 95 | 99 | *70 | **75 |
| | | | | | | | | | | |
| COMPONENT Nd | 18 | 35 | 20 | 15 | 7 | 4 | 1 | tr. | 26 | 23 |
| | | | | | | | | | | |
| IN SLm Ce | 50 | 2 | 2 | 2 | 15 | 2 | 2 | " | 2 | 1 |
| | | | | | | | | | | |
| (Wt.%) Pr | 7 | 18 | 8 | 8 | 3 | 9 | 2 | " | 2 | 1 |

Each of SLm's shown in Table 1, and Ni, Co, Al and Si were weighed and mixed together for the compounding ratio of SLmNi_{3.63}Co_{0.85}Al_{0.50}Si_{0.02}. This mixture was then heated and melted in a high-frequency melting furnace to produce an alloy. Each kind of the alloy so obtained was annealed at the temperature of 1000°C for 10 hours. In this manner, the respective alloys were produced. These alloys were pulverized into a powder form in the same manner as in the Example 1 above. The powdered alloys were then processed as described also in the above example of embodiment to manufacture the respective hydrogen-occlusion alloys. Electrodes manufactured from them were used as the negative electrodes and assembled together with positive electrodes and separators in the same manner as in the above Example 1 to produce cylindrical sealed type AA-Size 1000mAh storage batteries. None of them was equipped with a built-in internal pressure-measuring sensor device.

With these batteries, the standing time from the electrolyte fill-up to the start of the initial charge was 5 hours, the charge was discontinued when the charged electric quantity amounted to 20 % of the rated capacity, and the charge break continued for 15 hours, after which the initial charge was resumed to continue until the battery became fully charged. Other procedures up to and including the capacity confirmation test were the same as in the Example 1.

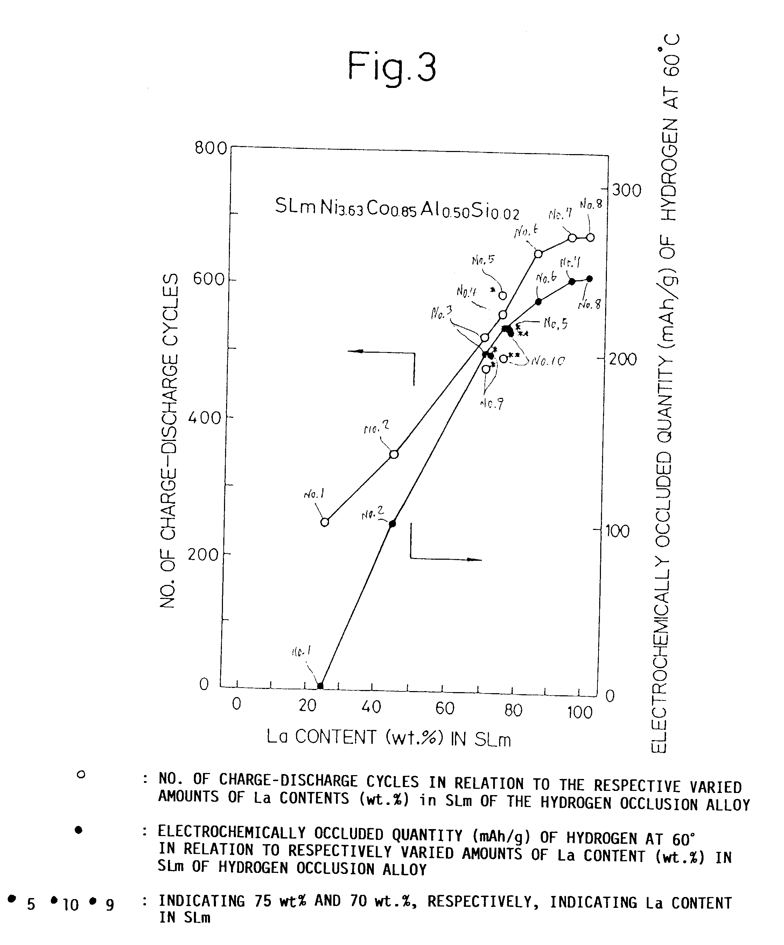

In order to conduct a cycle life test on these batteries, they were charged with 1 C current while controlling the charged ampere-hour by the - ΔV control system. After completion of the charge, they were discharged with 1 C current to the battery voltage of 1.OV. The battery life was taken as finished when the capacity of a battery had dropped to 60 % of its rated capacity. Under these conditions, the cycle life of a battery should be desirably 500 cycles or more. The test results are as shown in Fig. 3.

As clearly seen from Fig. 3 and Table 1, it has been shown that, when a hydrogen-occlusion electrode made of a hydrogen-occlusion alloy comprising the La content of SLm accounting for 70 wt.% or more and the Nd content for 20 wt.% or less is used, the battery life in terms of charge-discharge cycles is 500 cycles or more.

On the other hand, in order to measure how much hydrogen the above-mentioned respective hydrogen-occlusion alloys could electrochemically occlude in a constant-temperature condition, these alloys were first processed as described below to manufacture hydrogen-occlusion electrodes. They were mechanically pulverized to the particle size of 0.104 mm (150 mesh) or finer and mixed with a polytetrafluoroethylene (PTFE) powder accounting for 3 wt.% and a nickel carbonyl (INCO #210) powder for 15 wt.%. After allowing the PTFE to become sufficiently fibriform, ethyl alcohol was added to the mixture to make it slurry-like. This slurry-like material was applied to a foam nickel substrate for filling, and the filled substrate was dried and pressed for manufacture of a hydrogen-occlusion electrode. This electrode was such that it contained approximately one gram of the hydrogen-occlusion alloy.

Using this electrode as the negative electrode, a nickel plate as a counter electrode and an aqueous solution of potassium hydroxide having the specific gravity of 1.30 g/cm³ (at 20°C) as the electrolyte, an open type cell was constructed. A burette for collecting hydrogen gas was provided over the hydrogen-occlusion electrode. This cell was put in a constant temperature water bath of 60°C and the hydrogen-occlusion electrode thereof was charged with current of 70 mA per gram of alloy. The quantity of hydrogen which was electrochemically able to be occluded by the hydrogen-occlusion alloy contained in the hydrogen-occlusion electrode was determined from the quantity of electricity required for the charge thereof and that of hydrogen collected by the hydrogen gas-collecting burette. The occluded quantity of hydrogen determined under the above-mentioned conditions should be 200 mAh/g-alloy or greater to be desirable from a battery designing point of view. Fig. 3 shows the results.

As clearly seen from Fig. 3 and Table 1, it has been shown that, in the range where the La content of SLm accounting for 70 wt.% or more and the Nd content for 20 wt.% or less, the quantity of hydrogen occluded at the high temperature of 60°C is 200 mAh/g or greater. It has therefore been indicated that, using such a hydrogen-occlusion alloy, a storage battery equipped with an electrode featuring a high hydrogen-occlusion characteristic can be obtained.

### Example 3

SLm, for which was used a commercially available Mm or misch metal (La, 85 wt.%; Ce, 2 wt.%; Nd, 9 wt.%; and other rare earth elements, 4 wt.%), Ni, Co, Al and Si were weighed respectively and mixed together for a predetermined compounding ratio of SLmNiₐCo_{b}Al_{0.50}Si_{0.02}, wherein a = 4.38 - b, and b = 0.50, 0.60, 0.75, 0.85, 1.00, 1.20, 1.38 and 1.48, that is, a = 3.88, 3.78, 3.63, 3.53, 3.38, 3.18, 3.00 and 2.90 respectively. The respective mixtures were heated and melted in a high-frequency melting furnace to manufacture the respective hydrogen-occlusion alloys. Each of these alloys was then annealed at 1000°C for 10 hours, after which each alloy was mechanically pulverized into a fine powder of 0.104 mm (150 mesh) or finer to obtain a hydrogen-occlusion alloy powder.

Next, using these hydrogen-occlusion alloys mentioned above, hydrogen-occlusion electrodes were manufactured therefrom respectively in the same manner as in the Example 1. Using them as negative electrodes, a plurality of cylindrical sealed type AA-Size, 1000 mAh storage batteries were produced.

For the purpose of measuring the internal pressure of battery during an overcharge operation at 20°C, each of these batteries was equipped in advance with an internal pressure-measuring sensor device. Each of these batteries was kept standing for 5 hours as from the electrolyte fill-up, after which the initial charge was started to charge each of them and discontinued once when the charged electric quantity amounted to 20% of the rated capacity of the battery. This charge break time was 5 hours. The resumption of the initial charge and the other procedures that followed up to completion of the charge were the same as in the Example 1.

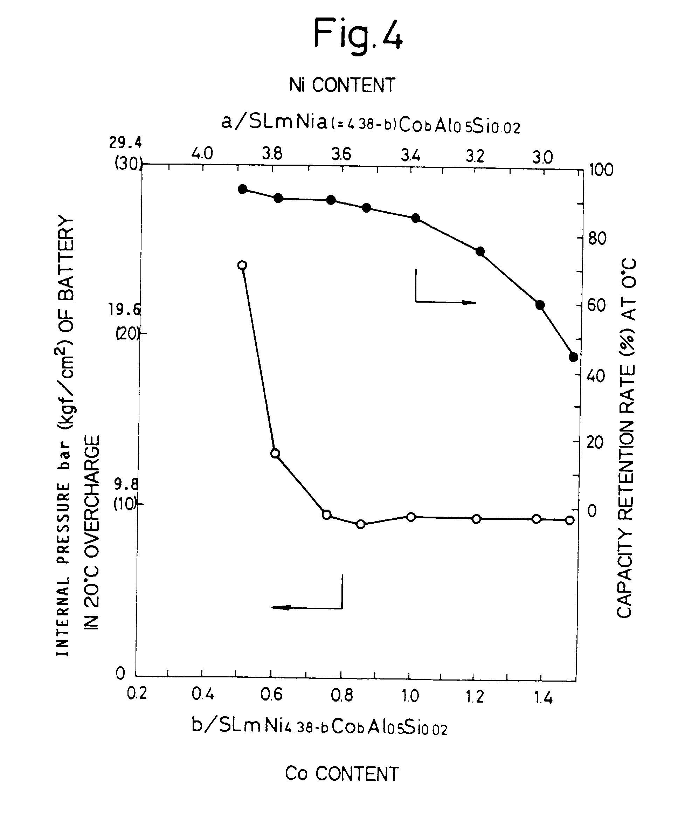

A test to measure the internal pressure of battery during an overcharge operation at 20°C was made on each of the storage batteries manufactured as above, said test being conducted in the same manner as in the Example 1. The internal pressure of battery measured as in this case should be 19.6 bar (20 Kgf/cm²) or lower to be desirable. The results of the test are as shown in Fig. 4.

As is clear from Fig. 4, it has been shown that when the Ni content is in the range of 3.0 ≦ a ≦ 3.8 and the Co content in the range of 0.6 ≦ b < 1.4, both based on SLm taken as 1, the internal pressure of battery can be kept at or below 19.6 bar (20 Kgf/cm²).

Further, these test batteries were charged with 0.2 C current at 20°C for 150% of the rated capacity, after which they were kept at 0°C for 12 hours. After that, the batteries were discharged with 1.5 C current at the same temperature (0°C) until the battery voltage came to 1.0V, so as the measure the discharge capacity. The capacity retention rate based on the 0°C rapid discharge test conducted as above was obtained by dividing the discharge capacity obtained with the test here by that determined for the same battery through the capacity confirmation test conducted earlier wherein the battery was discharged with 0.2 C current at 20°C. It is considered desirable if the capacity retention rate determined through the 0°C rapid discharge test as above is 60 % or higher. The test results are shown in Fig. 4.

As clearly seen from Fig. 4. it has been shown that, when the Ni content is in the range of 3.0 ≦ a ≦ 3.8 and the Co content in the range of 0.6. ≦ b < 1.4, both based on SLm taken as 1, the capacity retention rate at 0°C can be maintained at a desirable level of 60 % or higher.

### Example 4:

SLm, for which was used a commercially available Mm or misch metal (La, 85 wt.%; Ce, 2 wt.%; Nd, 9 wt.%; and other rare earth elements 4 wt.%), Ni, Co, Al and Si were weighed respectively and mixed together for a predetermined compounding ratio of SLmNi_{3.98-c}Co_{1.00}Al_{c}Si_{0.02}, wherein c = 0.20, 0.30, 0.40, 0.50, 0.60, 0.70 and 0.80. The respective mixtures were heated and melted in a high-frequency melting furnace to manufacture the respective alloys. Then, they were each annealed at 1000°C for 10 hours. Each of these alloys was mechanically pulverized into a fine powder of 0.104 mm (150 mesh) or finer to obtain a hydrogen-occlusion alloy powder.

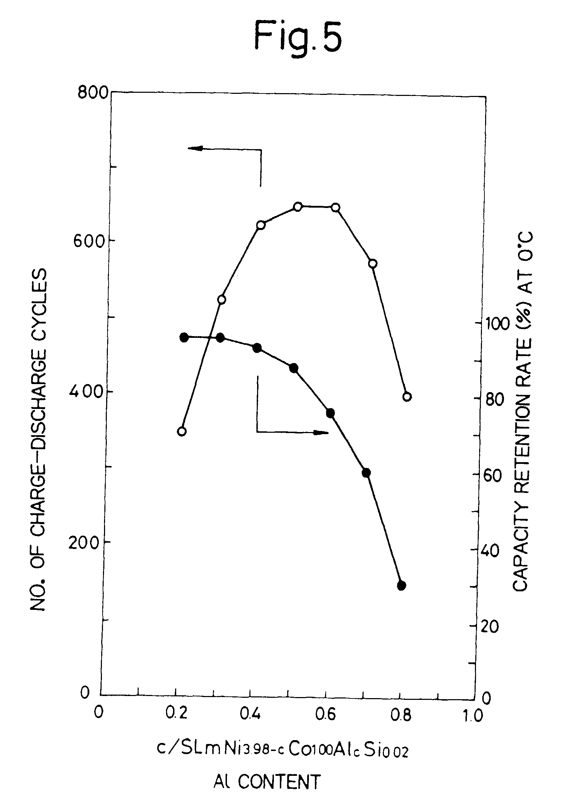

Using the respective hydrogen-occlusion alloys mentioned above, hydrogen-occlusion electrodes were manufactured therefrom respectively in the same manner as in the Example 1. Using them as negative electrodes, a plurality of sealed type storage batteries were manufactured in the same manner as described in the foregoing. A charge-discharge cycle life test was carried out on these batteries in the same manner as in the Example 2, the results of which test are as shown in Fig. 5. As clearly indicated in Fig. 5, it has been shown that when the Al content is in the range of 0.3 ≦ c ≦ 0.7 is based on SLm taken as 1, there can be obtained a desirable battery life of 500 cycles or more.

In addition, the capacity retention rate of each test battery carried out by the 0°C rapid discharge test was determined in the same manner as in the Example 3. The results thereof are also shown in Fig. 5.

As clearly seen from Fig. 5, it has been shown that, with the Al content in the range of 0.3 ≦ c ≦ 0.7 as based on SLm taken as 1, there can be obtained a desirable capacity retention rate of 60 % or higher.

### Example 5:

SLm, for which was used a commercially available Mm or misch metal (La, 85 wt.%; Ce, 2 wt.%; Nd, 9 wt.%; and other rare earth elements, 4 wt.%), Ni, Co, Al and Si were weighed respectively and mixed together for a predetermined compounding ratio of SLmNi_{3.65-d}Co_{0.85}Al_{0.50}Si_{d}, wherein d = 0.005, 0.01, 0.02, 0.03, 0.04, 0.05, 0.06 and 0.07. The respective mixtures were heated and melted in a high-frequency melting furnace to manufacture the respective alloys. They were each annealed at 1000°C for 10 hours. Next, each of these alloys was mechanically pulverized into a fine powder of 0,104 mm (150 mesh) or finer to obtain a hydrogen-occlusion alloy powder. It should be noted here that d = 0.005 represents the Si content contained as an impurity in the commercially available Mm.

Aside from the above, SLm, for which was used a commercially available Mm or misch metal (La, 85 wt.%, Ce, 2 wt.%; Nd, 9 wt.%; and other rare earth elements, 4 wt.%), Ni, Co, Al and Ge were weighed respectively and mixed together for a predetermined compounding ratio of SLmNi_{3.65-d}Co_{0.85}Al_{0.50}Ge_{d}, wherein d = 0.00, 0.05, 0.10, 0.20, 0.30 and 0.40. The respective mixtures were heated and melted in a high-frequency melting furnace to manufacture the respective alloys. Then, they were each annealed at 1000°C for 10 hours. Next, each of these alloys was mechanically pulverized into a fine powder of 0.104 mm (150 mesh) or finer to obtain a hydrogen-occlusion alloy powder.

Hydrogen-occlusion electrodes were manufactured in the same manner as in the Example 1 from the above-described respective hydrogen-occlusion alloys, that is, ones containing varied amounts of Si proportionally different from one another and the others containing varied amounts of Ge proportionally different from one another. Using these electrodes, a plurality of cylindrical sealed type AA-Size 1000 mAh storage batteries were manufactured. None of these batteries was equipped with an internal pressure-measuring sensor device. For these batteries, the standing time up to the start of the initial charge from the electrolyte fill-up was 5 hours and the initial charge was discontinued when the charged electric quantity amounted to 20 % of the rated capacity, said break lasting for 15 hours. The procedures to resume the initial charge and carry out other operations including those necessary to complete the charging of the battery and conduct the capacity confirmation test were the same as in the Example 1.

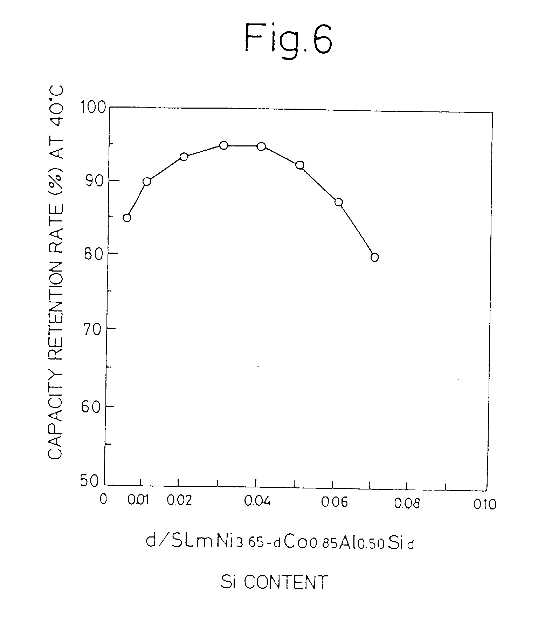

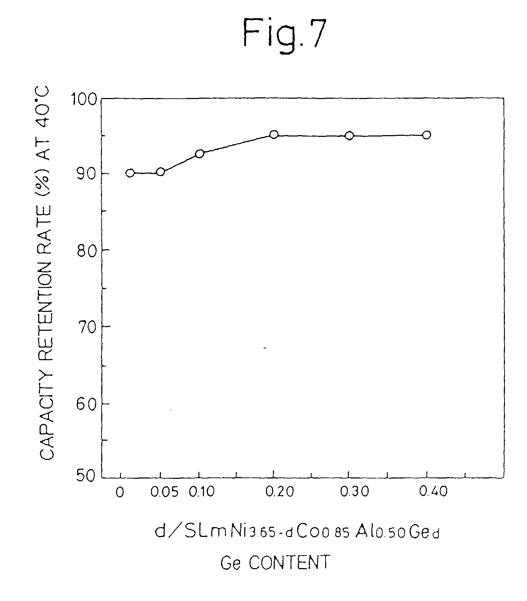

With these batteries maunfactured and activated by following the charge conditions of the present invention as described in the foregoing, a plurality of which batteries were equipped with the hydrogen-occlusion electrodes each so prepared as to contain a proportionally different amount of the Si content and another plurality of which batteries were equipped with the hydrogen-occlusion electrodes also each so prepared as to contain a proportionally different amount of the Ge content, a 40°C rapid discharge test was carried out to determine the capacity retention rate for each battery. More specifically, the batteries were each charged with 0.2 C current at 20°C for 150% of the rated capacity and thereafter kept at 40°C for 12 hours, after which they were discharged with 1.5-C current at the same temperature until the battery voltage dropped to 1.0V, so as to measure the discharge capacity thereof. The capacity retention rate based on this 40°C rapid discharge test was calculated by dividing the discharge capacity obtained with this test by that obtained for the same battery through the 0.2 C discharge capacity confirmation test conducted earlier at 20°C. The capacity retention rate obtained as above with the 40°C rapid discharge test should be 90 % or higher to be desirable. The test results are shown in Figs. 6 and 7.

As is clear from Fig. 6, it has been shown that when M, that is, Si in this case, is in the range of 0.01 ≦ d ≦ 0.05 based on SLm taken as 1, there can be maintained a desirable capacity retention rate of 90 % or higher at 40°C. Further, as clearly seen from Fig. 7, it has been shown that when M, that is, Ge in this case, is in the range of 0.01 ≦ d ≦ 0.3 based on SLm taken as 1, there can be maintained a 90 % or higher capacity retention rate as in case of Si above. The same effect was obtained also with a mixture of Si and Ge.

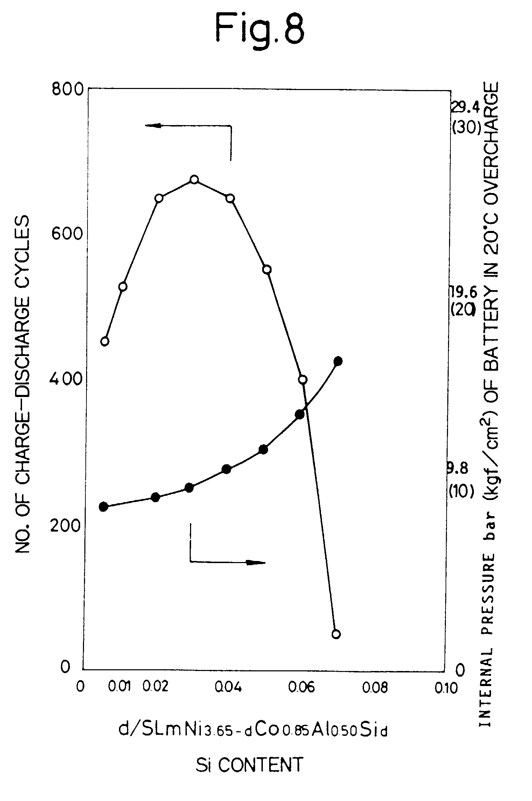

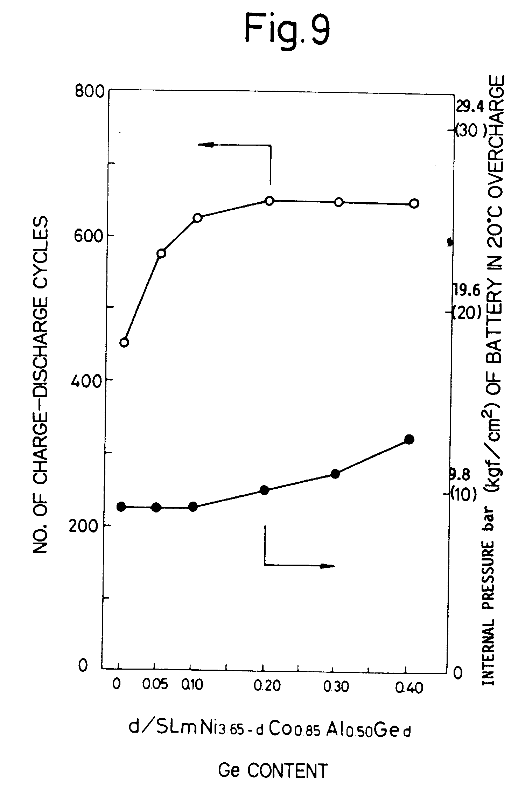

Further with the two kinds of the batteries manufactured as described above, a cycle life test was performed on them in the same manner as in the Example 2. In addition, a test to measure the internal pressure of battery during an overcharge thereof at 20°C was carried out on them in the same manner as in the Example 3. In these tests, the cycle life should be 500 cycles or more to be desirable while the internal pressure should be 19.6 bar (20 Kgf/cm²) or lower as desirable. Their results are shown in Figs. 8 and 9.

As clearly seen from Figs. 8 and 9, it has been shown that, when the composition ratio of Si to SLm taken as 1 is in the range of 0.01 ≦ d ≦ 0.05, in the case of M being Si, and when that of Ge to SLm is in the range of 0.01 ≦ d ≦ 0.30, in the case of M being Ge, the battery life in terms of charge-discharge cycles is maintained for 500 cycles or more while the internal pressure of battery during the overcharge at 20°C is kept down to 19.6 bar (20 Kgf/cm²) or less.

### Example 6:

SLm, for which was used a commercially available Mm or misch metal (La, 85 wt.%; Ce, 2 wt.%; Nd, 9 wt.%; and other rare earth elements, 4 wt.%), Ni, Co, Al and Si were weighed respectively and mixed together for a predetermined compounding ratio of SLm_{α}Ni_{3.63}Co_{0.85}Al_{0.50}Si_{0.02}, wherein 5/α (=a+b+c+d) = 4.30, 4.50, 4.70, 4.80, 4.90, 5.00, 5.10 and 5.20 . The respective mixtures were heated and melted in a high-frequency melting furnace to manufacture the respective alloys. They were then each annealed at 1000°C for 10 hours. Finally, each of these alloys was mechanically pulverized into a fine powder of 0.104 mm (150 mesh) or finer to obtain a hydrogen-occlusion alloy powder.

Using these various kinds of alloy powders obtained as above, various hydrogen-occlusion electrodes were manufactured therefrom in the same manner as in the Example 1. These electrodes together with other components were assembled to make up sealed type storage batteries, each of which was given the initial charge in accordance with the same conditions as in the Example 3 and further charged in the same manner as in the Example 1 for completion of the charge, thereby manufacturing the respective sealed type storage batteries.

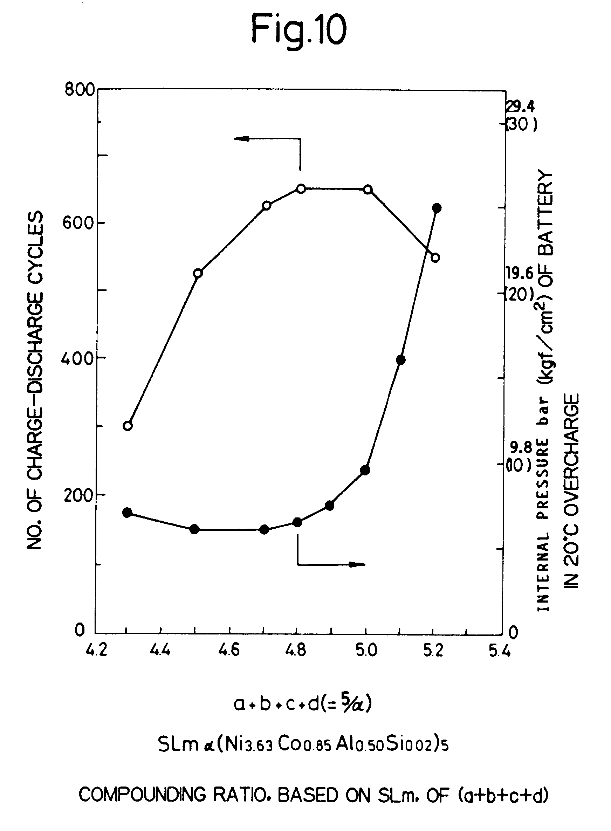

A charge-discharge cycle life test was carried out on these batteries in the same manner as in the Example 2 while a 20°C overcharge internal pressure-measuring test was carried out in the same manner as in the Example 3. Their results are shown in Fig. 10.

As clearly indicated in Fig. 10, it has been shown that when the compounding ratio, based on SLm taken as 1, of the sum total (a+b+c+d) of Ni, Co, Al and Si is in the range of 4.5 to 5.10, there is secured a charge-discharge cycle life of 500 cycles or more while the internal pressure of battery can be held down to 19.6 bar (20 Kgf/cm²) or lower.

Furthermore, in either case where Si was substituted by Ge or both of Si and Ge were used, there were obtained the same results as mentioned above.

According to the present invention described in the foregoing, when the initial charge for activation of a newly constructed sealed type hydrogen-occlusion electrode-equipped storage battery is started, if the standing time counted as from the electrolyte fill-up to the start of said initial charge is limited to 14 hours or less, the internal pressure of the battery after completion of the initial charge can be held down low during an overcharge operation thereof. In this case, if the standing time is limited to be within 10 hours or within 5 hours, the internal pressure can be held down further lower. In addition, when the initial charge is discontinued at such a time point that the battery is in such an incompletely charged condition that is from 5 % to less than 100 % of the rated capacity of the battery, the internal pressure of the battery can be kept low during the overcharging operation. In this case, when the break time of the initial charge is one hour or more, the electrode can become uniformly impregnated with the electrolyte during the said break time, so that the battery is uniformly charged with the initial charge resumed thereafter. As a result, the battery can be assured of a lowered internal pressure. Furthermore, especially when the initial charge is discontinued at such a time point that the charged condition of the battery has become 20 % of the rated capacity, the internal pressure of the battery can be held to the lowest, which is much preferable. In addition, the break time of the initial charge is preferably 5 hours or more. Especially when the break time thereof is 20 hours or more, which is given to the battery of which the incomplete charged condition is less than 100 % of the rated capacity thereof, the lowest internal pressure can be assured during the overcharging operation.

In the above-described embodiments when the composition of a hydrogen-occlusion alloy for constituting a hydrogen-occlusion electrode is as specified in the claim, the electrode not only costs comparatively less, but also enables a sealed type storage battery using the same to provide a longer charge-discharge cycle life and assure a lower capacity loss at either a high or low temperature and a lower internal pressure of the battery during an overcharging operation thereof.

Fig. **1** shows a curve representing a relationship between the standing time from the electrolyte fill-up to the start of the initial charge and the internal pressure of battery during the overcharge at 20°C.

Fig. **2** shows a graph of curves representing a relationship between the initial charge break time and the internal pressure of battery during the overcharge of 20°C.

Fig. **3** shows a graph of curves representing a relationship between the La content in the SLm component of the hydrogen-occlusion alloy for the electrode and the number of charge-discharge cycles and another between said La content and the quantity of hydrogen electrochemically occluded at 60°C , all in the embodiment Example 1 of the present invention.

Fig. **4** shows a graph of curves representing a relationship between the Co and the Ni contents contained in said alloy and the internal pressure of battery during the overcharge at 20°C and another between said Co and Ni contents and the capacity retention rate at 0°C.

Fig. **5** shows a graph of curves representing a relationship between the Al content contained in said alloy and the number of charge-discharge cycles and another between said Al content and the capacity retention rate at 0°C.

Fig. 6 shows a curve representing a relationship between the Si content contained in said alloy and the capacity retention rate at 40°C.

Fig. 7 shows a curve representing a relationship between the Ge content contained in said alloy and the capacity retention rate at 40°C.

Fig. 8 shows a graph of curves representing a relationship between the Si content contained in said alloy and the number of charge-discharge cycles and another between said Si content and the internal pressure of battery during the overcharge at 20°C.

Fig. 9 shows a graph of curves representing a relationship between the Ge content contained in said alloy and the number of charge-discharge cycles and another between said Ge content and the internal pressure of battery during the overcharge at 20°C.

Fig. 10 shows a graph of curves representing a relationship between the compounding ratio, based on SLm, of the total sum of Ni, Co, Al and M, and the number of charge-discharge cycles, and another between said compounding ratio and the internal pressure of battery during the overcharge at 20°C.

## Claims

1. A hydrogen occlusion alloy for an electrode of a sealed type storage battery,
**characterized in that**
the composition thereof is expressed by a general formula of SLmNiₐCo_{b}Al_{c}M_{d},
wherein SLm represents a mixture of La, Nd and at least one of the other rare earth elements and M represents at least one element selected from Si and Ge,
said SLm comprising La for 70 wt.% or more and Nd for 20 wt.% or less and the compounding ratio further representing 3.0 ≦ a ≦ 3.8, 0.6 ≦ b ≦ 1.4, 0.3 ≦ c ≦ 0.7 and the range of d being 0.01 ≦ d ≦ 0.05 when M is Si and 0.01 ≦ d ≦ 0.3 when M is Ge.

## Patentansprüche

1. Wasserstoffeinlagerungs-Legierung für eine Elektrode einer Speicherbatterie vom geschlossenen Typ, dadurch gekennzeichnet, daß
die Zusammensetzung durch die allgemeine Formel SLmNiₐCo_{b}Al_{c}M_{d} dargestellt ist, wobei
SLm ein Gemisch von La, Nd und mindestens einem anderen Seltenerdenelement darstellt und M mindestens ein Element darstellt ausgewählt unter Si und Ge, wobei
SLm La zu 70 Gew.-% oder mehr und Nd zu 20 Gew.-% oder weniger umfaßt und wobei
das Mischungsverhältnis weiter dargestellt ist durch 3,0 ≤ a ≤ 3,8, 0,6 ≤ b ≤ 1,4, 0,3 ≤ c ≤ 0,7 und wobei der Bereich für d 0,01 ≤ d ≤ 0,05 ist, wenn M Si ist und 0,01 ≤ d ≤ 0,3 ist, wenn M Ge ist.

## Revendications

1. Alliage d'occlusion d'hydrogène pour électrode d'accumulateur de type étanche, caractérisé en ce que sa composition est exprimée par la formule générale SLmNiₐCo_{b}Al_{c}M_{d}, dans laquelle SLm représente un mélange de La, Nd et d'au moins un autre élément des terres rares et M représente au moins un élément choisi parmi Si et Ge, ledit SLm contenant 70% en poids ou plus de La et 20% en poids ou moins de Nd le rapport de composition étant en outre tel que :
3,0 ≤ a ≤ 3,8 0,6 ≤ b ≤ 1,4 0,3 ≤ c ≤ 0,7
et la fourchette pour d étant 0,01 ≤ d ≤ 0,05 quand M est du Si et 0,01 ≤ d ≤ 0,3 quand M est du Ge.
